# EUROPEAN PATENT APPLICATION

(11) **EP 1 598 672 A2**
(43) Date of publication of application: **23.11.2005**
(21) Application number: 05103886.7
(22) Date of filing: 10.05.2005
(51) Int. Cl.: G01P 3/487, G01D 5/14, H02K 29/14, H02K 29/06, H02P 21/00

(54) **Device for detecting the speed and the position of a rotating shaft**

(30) Priority: 21.05.2004 IT GE20040045
(71) Applicant: Selin Sistemi S.p.A., 16153 Genova (IT)
(72) Inventor: Mengaroni, Corrado, 20099, Sesto San Giovanni (IT); Pallottini, Alberto, 16153, Genova (IT)
(74) Representative: Porsia, Dino

(57) **Abstract**

Device for detecting the speed and the position of a rotating shaft (1), comprising an annular magnetic member (202) keyed onto said shaft (1) and means (113) for detecting the magnetic field of said magnetic member (202), characterized in that said magnetic member (202) comprises at least two symmetrical portions with mutually opposite polarity, said portions possessing sinusoidal field magnetization, and said detection means comprise at least one pair of sensors (113) for detecting the magnetic field which are similar to each other and electrically staggered at 90º, there being envisaged a processing unit (15) connected to said detection means (113) and able, by means of a suitable program, to retrieve the speed and position data of said rotating shaft from the data acquired by means of said detection means (113).

## Description

The present invention relates to a device for detecting the speed and the position of a rotating shaft.

In numerous applications it is decidedly important to know the exact angular velocity of a rotating shaft, whether it be for operating machines or for other types of apparatus; moreover, it is often necessary to know also the exact position in which said rotating shaft is situated in a given instant. There exist a very large number of devices which hitherto have attempted to offer a solution to this type of need; in most cases two substantially opposing solutions have been proposed: in fact either the adaptability of the device intended for detection was ensured or extremely precise data was provided, but only for well-defined rotating apparatus. In practice it hitherto appeared to be extremely problematic to ensure a very high degree of precision with devices able to be easily "personalized" to suit various applications.

Among the various detection systems those which are widely used are based on magnetic interaction; generally a magnetic member is positioned on the movable part of the device, integral with the rotating shaft, and sensors means detect the magnetic field thereof.

As already mentioned above, one of the main problems is associated with the difficulty in obtaining precise data on rotating-shaft apparatus of a varying nature; in fact, these devices may normally be affected negatively by both the radial and the axial mechanical play of the rotating shaft. Moreover, in order to provide devices of this type which are sufficiently reliable and precise, hitherto it was necessary to adopt high-cost detection means which reduced considerably the areas of application of these systems.

The object of the present invention is to provide a device for detecting the speed and the position of a rotating shaft, which may be used in a wide range of apparatus, is constructionally substantially simple and low-cost and provides reliable data which is affected to a minimum degree by errors.

The present invention therefore relates to a device for detecting the speed and the position of a rotating shaft comprising an annular magnetic member keyed onto said shaft and means for detecting the magnetic field of said magnetic member; said magnetic member comprises at least two symmetrical portions with mutually opposite polarity, said portions possessing sinusoidal field magnetization, and said detection means comprise at least one pair of sensors for detecting the magnetic field which are similar to each other and electrically staggered at 90º, there being envisaged a processing unit connected to said detection means and able, by means of a suitable program, to retrieve the speed and position data of said rotating shaft from the data acquired by means of said detection means.

In a preferred embodiment, said detection means comprise linear Hall sensors.

The present invention relates furthermore to a method for determining the speed and the position of a rotating shaft, comprising the detection of a series of values relating to vectorial parameters within a given time interval, the digitalization of said values, the processing of said values by means of a suitable program which envisages the software implementation of a phase lock loop comprising: the conversion of the digitalized data, the error calculation on the basis of the data within the loop, the adjustment/filtration of the data, the integration of the data and the reintroduction of the data into the loop, suitably adapted to data scale factors, the angular velocity and angular position values of said shaft being retrieved for each instant.

Further advantages and characteristic features of the device according to the present invention will emerge from the following description of an embodiment thereof, provided by way of a non-limiting example, with reference to the plates of the accompanying drawings, in which:
Figure 1 is a cross-sectional view of an embodiment of the device according to the present invention;
Figure 2 is a front view of a component of the device according to the invention;
Figure 3 is a front view of another component of the device according to the invention;
Figure 4 is a block diagram which shows schematically the hardware and software interfaces of the device according to the present invention; and
Figure 5 is a flow diagram which shows the program for implementing the phase lock loop used in accordance with the method of the present invention.

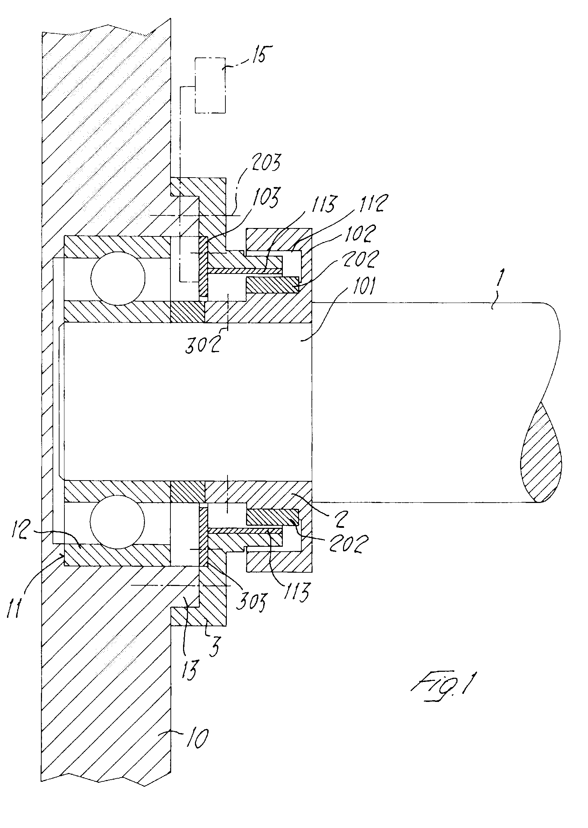

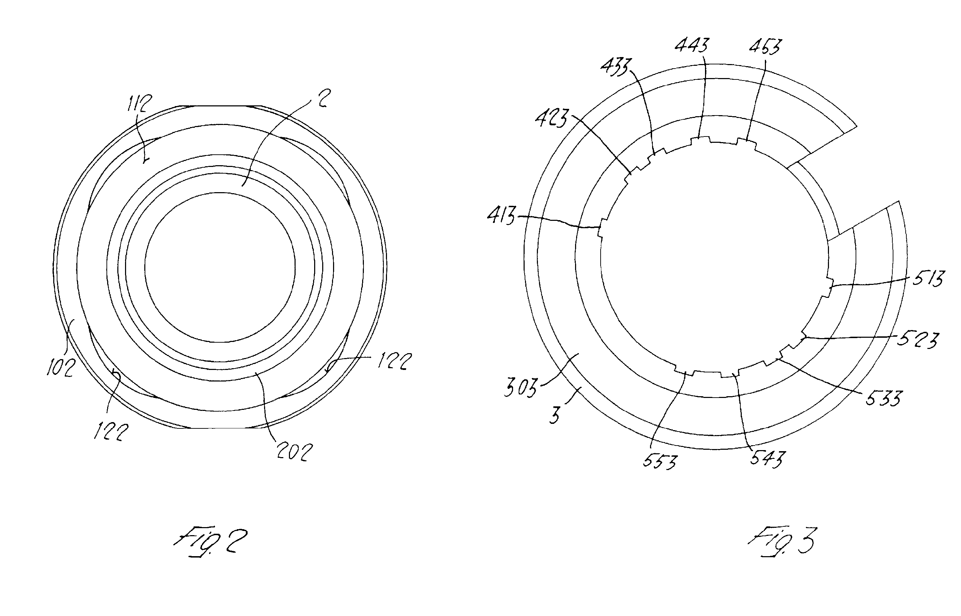

Figure 1 shows an embodiment of the device according to the present invention; 1 denotes a rotating shaft on which this device is mounted. The hub 101 at the end of the axis 1 is inserted inside the bearing 12 seated in the cavity 11 of the support wall 10; from the outgoing edge of the cavity 11 there projects axially a flange 13 to which there is fixed via suitable means 203 a toroidal plate 3 having, formed inside it, an annular cavity 303 which seats the annular support 103 of the sensor means 113. The processing unit 15 is connected to the support 103 and, via this support, is connected to all the said sensors 113. The rotating shaft 1 has keyed on it, via the fixing means 302, a ring 2 provided with a projecting radial flange 102; said flange 102 has, formed inside it, an annular groove 112, the side wall of which directed towards said shaft 1 seats the portions of the magnetic member 202. Figure 2 shows a front view of the ring 2 supporting the magnetic member 202; identical parts are indicated by the same numbers. It is possible to see, denoted by 122, the milled areas formed on the flange 102 opposite each of the poles of the magnetic member 202, the use of a four-pole magnetic member being considered in this case.

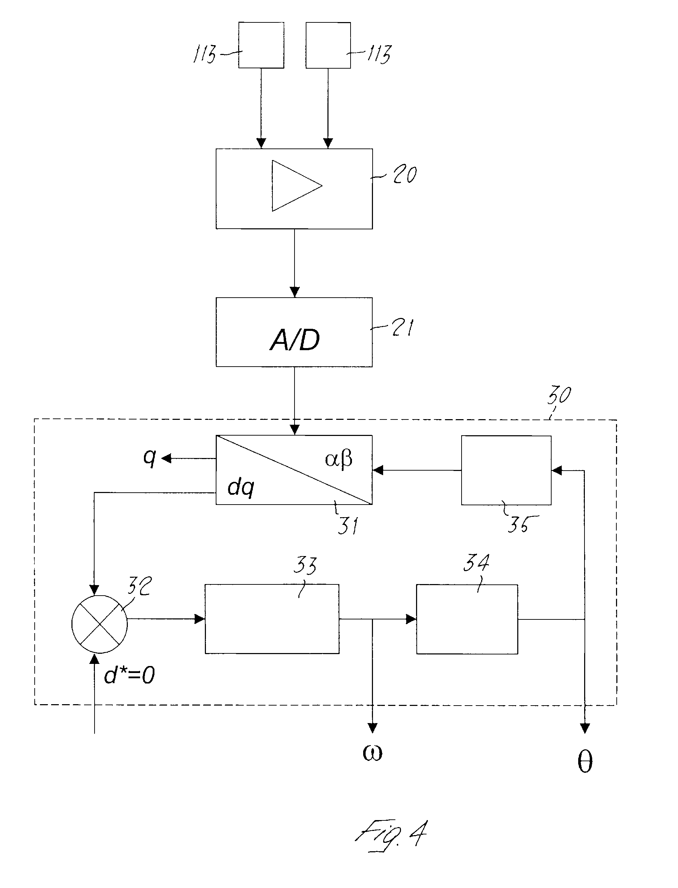

Figure 3 shows a front view of the toroidal plate 3; the cavities 303 intended to seat the sensors 113, not shown here, can be seen; the inner wall of the plate 3 has, formed therein, the radial recesses 413, 423, 433, 443 and 453 opposite which the radial recesses 513, 523, 533, 543 and 553 are situated, respectively; these recesses are intended to seat two pairs of sensors 113, described above, which are positioned inside said recesses depending on the number of portions which form the magnetic member 202.

The operating principle of the device according to the present invention will become clear from the following description. The magnetic member 202 comprises a plurality of portions magnetized with a sinusoidal field; this magnetization allows a greater degree of resolution of the data detected and consequently a greater accuracy in the detection operations. The portions which form the magnetic member 202 must be at least two in number with opposite polarities and may consist of any even number, with alternating polarities, depending on the circumference of the shaft on which they must be keyed by means of the ring 2. Obviously, the greater the number of poles mounted on the shaft, the better will be the resolution of the signal which can be detected by the sensors. As can be seen from Figure 2, the flange 102 may have, on the side directed towards the groove 112 formed therein, milled areas 122; these milled areas arranged in this way form a variable air gap for the magnetic member 202 so as to compensate for any imprecision in the sinusoidal magnetic field created in the portions which form it.

The sensors 113 are arranged inside the recesses formed radially in the toroidal plate 3; these recesses are formed taking into account two factors: the sensors 113 of each pair, which are electrically staggered relative to each other at 90º, must be arranged geometrically opposite each other; moreover, in the case where two pairs of sensors are used, as shown in the accompanying drawings, the sensors of the two pairs must be angularly spaced from each other by an arc equal to an angle which is related to the number of poles which form the magnetic member 202. In the case where said member is formed by four poles, the sensors are arranged on the plate 3 with one pair arranged in the recesses 553 and 453 and the other pair arranged in the recesses 533 and 433; the recesses 553, 533 and 453, 433 are therefore separated by an arc corresponding to an angle of 45º. In the case, instead, where six poles of the magnetic member 202 are present on the ring 2, the sensors will be positioned respectively in the recesses 513, 413 and 523, 423, and between the two adjacent sensors there will be the arc corresponding to an angle of 30º. In general, if 2pr is the circumference of said magnetic member, the length of the arc which separates two adjacent sensors and therefore two different pairs of sensors, will be equal to 2πr/2n where n is the number of poles of the magnetic member 202. This way of positioning the sensors on the plate allows detection of the half-cycle of the magnetic field, depending on the number of poles arranged on the shaft.

The sensors of the individual detection pair will instead be arranged opposite each other and electrically staggered at 90º; this arrangement, on the one hand, allows better determination of the positional data and, on the other hand, with a single type of detection, consisting of homogeneous data, the system is able to evaluate the angular velocity in addition to the electrical position of the axis. Hall sensors are used as means for detecting the sinusoidal magnetic field of the magnetic member 202, said sensors using, in a manner known per se, the generation of a difference in potential in a semiconductor strip having, flowing through it, a control current and passed through by a magnetic field perpendicular to its plane. This type of sensor offers the considerable advantage that it does not require sliding contacts nor rotating or static windings.

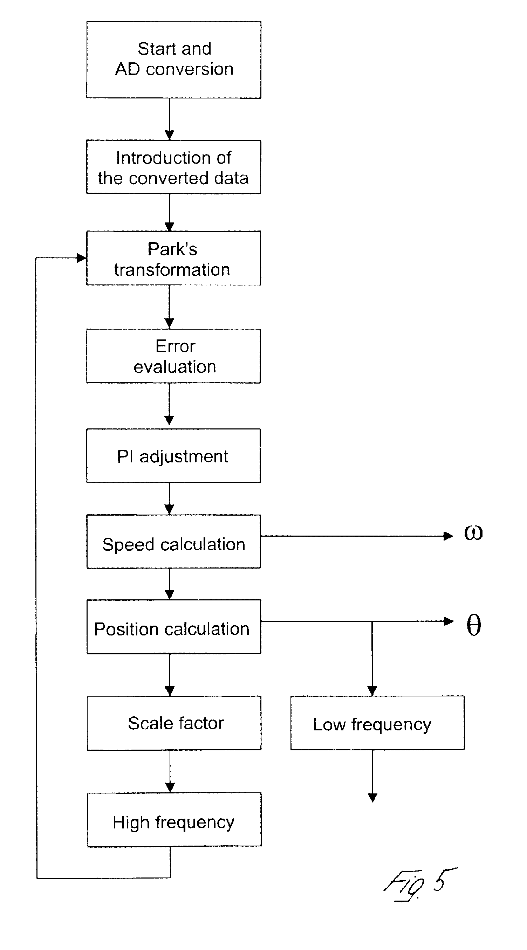

With reference to Figures 4 and 5, the method according to the present invention will now be described. The signal supplied by the two sensors 113, namely a sinusoidal voltage, resulting from the sinusoidal character of the magnetic field of the member 202, is amplified at 20 in such a way as to adjust all the data obtained within the range of 0-5 V suitable for analog/digital conversion (21) into data with 10-bit resolution. The digitalized data then undergoes the processing step (indicated by the broken line 30) consisting in software implementation of a phase lock loop; Park's transformation (31) is applied to the data introduced after digitalization together with that generated in the loop. Subsequently the comparison (32) results in determination of the error between the two series of data; after suitable adjustment (33), the first result which is obtained is the angular velocity v and, thereafter, following integration (34) the electrical position q of the shaft is obtained. This data, after suitable readaptation (35), is introduced again into the loop for comparison with the new digitalized data supplied by the sensors 113.

The phase lock loop is a control system, the aim of which is synchronization of the instantaneous angle, or the phase and the frequency, of a signal generated locally with a signal provided at the input, also called a reference signal. In the literature, the term PLL, an abbreviation of Phase Lock Loop, is widely used.

Synchronization of the instantaneous angle (or also "locking") is performed by means of comparison of the phases. Once this state has been achieved, the phase error between the reference signal and the signal generated locally is very small or zero. If this error, owing to a disturbance or a variation of the input signal, starts to increase, the control mechanism responds, altering its own operating state, so as to reset the value thereof.

The components of a PLL in a configuration of a generic type are: a phase comparator or detector (PD), a loop filter (LF) and a voltage controlled oscillator (VCO). In the case of the method according to the present invention, the components of the phase lock loop are implemented on a software level by suitable operators; Park's transformation performs the task of a phase comparator, the adjusting proportional integrator (33) performs the function of the loop filter and the integrator (34) that of the controlled voltage oscillator. Park's transformation, which historically was devised for studying the dynamics of rotating electric machines, is commonly used in this sector; in this case the transformation was applied to rotating shafts.

Figure 5 shows in greater detail the main processing steps which form the program used in the method according to the present invention; the values detected and amplified as described above are digitalized and memorized; then they are processed using Park's transformation together with the data supplied by the loop. By convergence of the two sets of data, namely minimization of the error generated, after adjustment by means of the proportional integrator, detection of the speed is performed, and the angular position is obtained by integrating this data. The data which is reintroduced into the cycle of the phase lock loop is rebalanced by means of a scale factor which takes into account the electrical frequency ratio which exists between the sensors and the induction motor which move the rotating axis. The low frequency data is thus used to monitor the electric frequency of the induction motor, while the normalised high frequency data is reintroduced into the phase lock loop. The program described above may be realized in different computer languages; in a preferred embodiment assembly language was chosen.

The central processing unit 15, which comprises the amplifier means, the analog/digital conversion means and the processor means in which the phase lock loop was implemented, may be positioned both in the machine to be monitored in the vicinity of the sensor means, or incorporated into the static part of said sensor, and in the power supply and control panel of said machine.

The device and the method according to the present invention in this way ensure a considerable independence of the data detected from the influence of mechanical factors, such as axial or radial play, as well as errors in eccentricity or ovalisation of the shaft or diversity of magnetic field or also temperature drift on the magnets.

## Claims

1. Device for detecting the speed and the position of a rotating shaft (1), comprising an annular magnetic member (202) keyed onto said shaft (1) and means (113) for detecting the magnetic field of said magnetic member (202), **characterized in that** said magnetic member (202) comprises at least two symmetrical portions with mutually opposite polarity, said portions possessing sinusoidal field magnetization, and said detection means comprise at least one pair of sensors (113) for detecting the magnetic field which are similar to each other and electrically staggered at 90º, there being envisaged a processing unit (15) connected to said detection means (113) and able, by means of a suitable program, to retrieve the speed and position data of said rotating shaft from the data acquired by means of said detection means (113).

2. Device according to Claim 1, in which at least two pairs of sensors (113) are envisaged, the sensors of each pair being diametrically opposite each other with respect to said shaft (1) and there being established between the two adjacent sensors a distance equal to an arc of 2πr/2n, where n is the number of symmetrical portions with opposite polarity of said magnetic member (202) and r is the radius of said magnetic member (202).

3. Device according to Claim 2, in which said symmetrical portions with opposite polarity of said magnetic member (202) are in even number from 4 to 12.

4. Device according to any one of the preceding Claims 1 to 3, in which said detection means comprise linear Hall sensors (113).

5. Device according to any one of the preceding Claims 1 to 4, in which said processing unit comprises amplifier means (20), analog-digital conversion means (21) and processor means (30).

6. Method for determining the speed and the position of a rotating shaft (1) comprising the detection of a series of values relating to vectorial parameters within a given time interval, the digitalization of said values, the processing of said values by means of a suitable program which envisages the software implementation of a phase lock loop comprising: phase comparison of the digitalized data, the error calculation on the basis of the data within the loop, the adjustment/filtration of the data, the integration of the data, and the reintroduction of the data into the loop, suitably adapted to data scale factors, the angular velocity and angular position values of said shaft being retrieved for each instant.

7. Method according to Claim 6, in which said vectorial parameters are sinusoidal voltages, a step involving amplification of the detected signal being envisaged before the digitalization step.

8. Method according to Claim 7, in which said amplification step adjusts all the signals detected in the range of between 0 and 5 V.

9. Method according to Claim 8, in which said digitalization step is performed with 10-bit resolution.

10. Method according to any one of the preceding Claims 6 to 9, in which said phase comparison step is performed by means of application of Park's transformation.

11. Computer program, which can be directly loaded into the internal memory of a computer, comprising suitable software codes able to perform the steps of the method according to any one of Claims 6 to 10, when said program is started in a computer.

12. Program according to Claim 11, in which the software codes used to compile said program are in assembly language.
